# EUROPEAN PATENT SPECIFICATION

(11) **EP 4 343 141 B1**
(45) Date of publication and mention of the grant of the patent: **07.10.2026**
(21) Application number: 22197603.8
(22) Date of filing: 24.09.2022
(51) Int. Cl.: F03D 7/02, F03D 7/04

(54) **DYNAMIC AI BASED SELF-ADAPTING WINDMILL GENERATOR**
DYNAMISCHER, SELBSTANPASSENDER GENERATOR FÜR WINDMÜHLE AUF AI-BASIS
GÉNÉRATEUR ÉOLIEN À AUTO-ADAPTATION DYNAMIQUE BASÉ SUR L'IA

(43) Date of publication of application: 27.03.2024
(73) Proprietor: Costa-Requena, Jose, 02150 Espoo (FI)
(72) Inventor: Costa-Requena, Jose, 02150 Espoo (FI)

(56) References cited:
- CN-A- 106 640 517
- IT-A1- BA20 110 022
- RU-C2- 2 436 992
- US-A1- 2005 173 928
- US-A1- 2007 048 137
- US-A1- 2019 265 387

## Description

### TECHNICAL SECTOR

This invention is related in general to an electric generator based on a windmill, based on a dynamic, and self-adaptive surface of the wind generator and usage of Artificial Intelligence or Machine learning logic to optimize the generation of electricity based on the wind available at all times and accumulate the generated energy as mechanical inertia to be released at later stage.

### STATE OF THE TECHNIQUE

There is a huge diversity of windmill-based electricity generators with different layouts and dimensions. But there are currently no windmills in which the dimensions of the surfaces capturing wind flow extend or retract dynamically and automatically depending on the flow of wind available at any given moment, which is detected by the same system of the mill to adapt to the wind flow present in each moment. The windmill will include a set of in-built local sensors such wind direction monitoring device, humidity, temperature and other parameters collected from online sources e.g. Public Internet or private data networks that obtain weather forecast information. The AI/ML module in the windmill will collect the parameters from the local sensors together with the information from online sources to predict wind flow and adapt the surface of the windmill for optimal wind capture and energy generation. The usual windmills are fixed and static and thus the electricity generated strongly depends on the dimensioning made during the design phase. The current state of the art the location for the installation and dimensioning is based on the expected wind flow in the specific area where the windmill will be deployed.

Windmills are designed and placed in locations where the wind is expected to be able to move the surface of the wind generator. If these static wind turbines are too big or if the wind flow is reduced, then electricity will only be generated on certain occasions and electricity generation will stop. Currently, windmills can rotate their blades to vary the surface, but they cannot modify the surface of the blades, that is, the surface is static. On the other hand, if the windmill has been sized for a low wind flow, the electricity generated will be less than the electricity that could actually be generated. Currently there are many technological designs used in windmills to generate electricity. Among them, it is worth highlighting the designs formed by a vertical mast that has vertical surfaces that will generate electricity by moving due to the flow of wind. There is a second configuration that consists of wind generators with a vertical mast and a horizontal surface that is connected to the vertical mast and generates electricity by the movement of said horizontal surface. There are other types of configurations but for the most part these two designs are the starting point.

US2019/265387A1 is a relevant example of prior art.

### DESCRIPTION OF THE INVENTION

In the following description of the invention, reference is made to the attached drawings of the system in which different configurations are illustrated under which the invention could be developed with an AI/ML module that will adapt the surface on the horizontal or vertical axis and the invention includes a mechanical system for accumulation of rotation energy from the windmill into mechanical energy. The rotation from the windmill is commnunicated to the mechanical structure that consists of a pressure valve, horizontal springs or spiral spring made of metal blades that will be pressed with each rotating movement of the windmill. The pressure accumulated in the mechanical structure will be released to the electricity generator when there is no sufficient wind flow to generate electricity. The windmill rotation force will be used to generate electricity translating the rotation movement directly to electricity generator but at the same time the windmill will also translate the rotating movements to the mechanical structure that will put pressure to the mechanical elements will comprise a pressure valve, a set of horizontal springs or spiral springs made of metal blades. This mechanical structure will release their energy as rotation movements directly into electricity generator when needed if there is no air flow and windmill cannot rotate the electricity generator. It should also be mentioned that there is the possibility that the invention can be carried out using other configurations, both structural and operational, and that this would not affect the scope of the present invention. Generally, the present invention is focused on a method and equipment, a system for generating electricity based on a smart AI/ML based self-adaptive, dynamic and automatic windmill or wind generator with energy accumulator as mechanical inertia system into a pressure valve, metal horizontal spring, sprial springs made of blades or similar module that accumulates the rotation from the windmill into mechanical inertia. Making use of the description provided here, the invention could be implemented in different ways and materials; the blades or the capture surface so that it can be expanded or retracted, the local sensors or online data will be processed b AI/ML module or system that measures or predicts the captures the increase or decrease in the flow or flow of air and modify the air capturing surface, establishes the orders or signals of opening, expansion or retraction or closing of the blade surface or pickup surface or engineering techniques to produce software, firmware or hardware or any combination. The AI/ML will also interact with the mechanical structure based on pressure valve, horizontal springs or spiral springs made of metal blades so the rotating force from the windmill is accumulated as inertia energy in the mechanical module for later release when there is no sufficient wind flow or additional electricity is required. From the description provided here, experts in this field will be able to combine materials, components and software for the AI/ML module, the dynamic windmill air capturing surface so that the blades or catchment surface can contract, retract or expand, extend adjusting to the flow or flow of wind available at any time and adjusting and the mechanical module for inertia energy accumulation to described in the present invention. The present invention and its possible variants describe a method and system that is set forth both in its description and its drawings. It is not intended to be exhaustive and limit the invention to what is stated here, since there are many variants and possibilities of what is described here. What is intended is to establish indications on the basis and essence of the invention and establish guidelines for it through the claims that are set forth.

### DESCRIPTION OF THE FIGURES

The invention is described in relation to what is developed in the following figures;

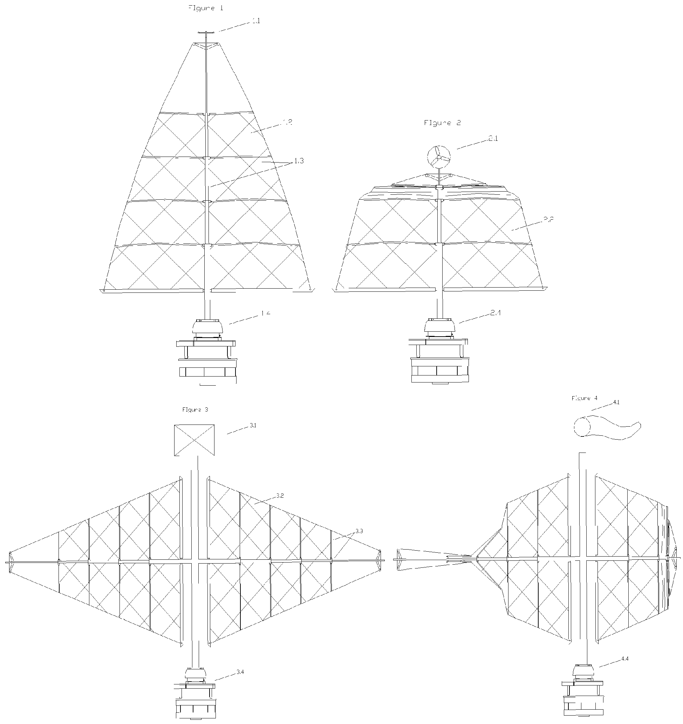

FIG. 1 Shows an example of the mast and the elements of the infrastructure named as component 1.3 that supports the material that makes up the surface of the Windmill and that is marked as component 1.2 in the figure. This figure shows that the windmill's wind flow capturing area has been extended to its maximum allowed by the windmill structure along its vertical axis. The figure also includes component 1.1 that measures the current of the wind flow and that allows the mast and the support structure to interact with the rest of the elements that make up the windmill to expand and collect the surface of the windmill. This figure shows the possibility of expansion or retraction of the elements of the windmill by means of the vertical mast, but the existence of other types of configurations is possible. The figure also shows the electrical generator and the mechanical components needed to increase or decrease the conversion factor of the windmill's rotation into electricity, as shown in component 1.4.
FIG. 2 Shows the same type of windmill as in FIG 1 but in this case the windmill wind flow capture surface is collected showing the material designated as component 2.2 which forms the windmill capture surface and following this configuration, said surface is collected along the vertical axis or mast. This figure also shows component 2.1, which consists of the element that includes the AI/ML component together will all the sensors that will measure or capture the wind flow and send the signal to the mast and other elements of the windmill so that they retract, collect or extend or expand, reducing or enlarging the surface of the windmill. uptake of the windmill always adjusting to the existing wind flow. The component 2.1 in addition to the AI/ML processing will include a set of local sensors (wind direction measurement, humidity, pressure, temperature, etc) together with connectivity module to access remote information from online services either public (public Internet) or private networks that the AI/ML module will utilize to predict the wind flow and will instruct the module that manage the surface for capturing wind to adapt to the expected air flows. The figure also shows element 2.4 which consists of the mechanical energy accumulator together with the electric generator. The module 2.4 includes all the mechanical elements that will accumulate rotating energy from the windmill and will translate into mechanical inertia strength stored in pressure valve, metallic springs or blades that will release the energy when needed again into rotating force that is communicated to the electric generator necessary to transform the rotation of the windmill into electricity. The module 2.4 will received the control messages from module 2.1 to instruct whether the rotating energy from the wind mill is communicated directly to the electric generator and is accumulated into mechanical module stored as inertia energy by the metallic elements such as pressure valve, spring or bended metal modules that will release the rotating energy when instructed by the module 2.1
FIG. 3 Shows another example of the present invention where on this occasion the horizontal mast supports and carries out the extension or retraction of the catchment surface of the windmill. The mast and other components of the structure are designated as component 3.3 in this figure. The figure shows the surface and the material that makes up the area or surface of the windmill that captures the wind flow and is designated as component 3.2. The figure shows how the surface of the windmill has been extended to its maximum allowed and is supported by the horizontal arms of the mast. The figure also includes component 3.1, which measures or captures the wind flow and interacts with the mast and the other components of the windmill in order to reduce or enlarge the capture surface. In this figure, the contraction or expansion of the capture surface is carried out by means of the horizontal part of the mast, but another series of configurations could be given. The drawing also shows the module that includes the mechanical component that stores rotating energy in metal elements (pressure valve, springs or metal blades) and the electrical generator with additional mechanical elements necessary for the transformation of the rotary movement of the windmill into electricity, component 3.4.
FIG. 4 Shows the same example of a windmill as in Figure 3. But this time the catchment surface of the windmill has been collected showing the material called component 4.2 and that it has been folded over the horizontal part of the mast. The figure also shows component 4.1, which consists of the element with the AI/ML and the local sensors and the connectivity module for accessing remote online data that measures the wind flow and future predictions to determines when the mast and other parts of the windmill structure retract or extend. The drawing also shows element 2.4 which consists of the mechanical module that accumulates the rotating energy from the windmill into mechanical energy stored by pressure valve, metallic springs or blades to be released when needed. The element 2.4 also includes the electrical generator and all the mechanical components necessary to transform the movement of the wind flow captured by the windmill surface into electricity when instructed by the AI/ML module.

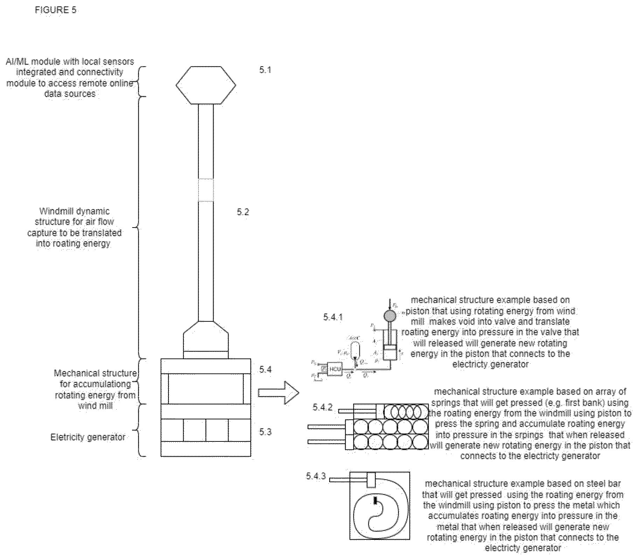

FIG. 5 Shows the same example of mechanical module that is controlled by the AI/ML module element 5.1 that interacts with the windmill element 5.2 to generate rotating energy through dynamic adaptation of the windmill surface that will communicate with the electric generator element 5.3 for generating electricity but element 5.4 consists of the mechanical structure that accumulates rotating energy from the windmill into pressure, inertia or mechanical energy stored by creating void space through a valve like example element 5.4.1 or changing original shape of mechanical elements such as springs like example element 5.4.2 or spiral made of metal bar like example 5.4.3 that will release new rotating energy into electric generator when instructed by AI/ML module.

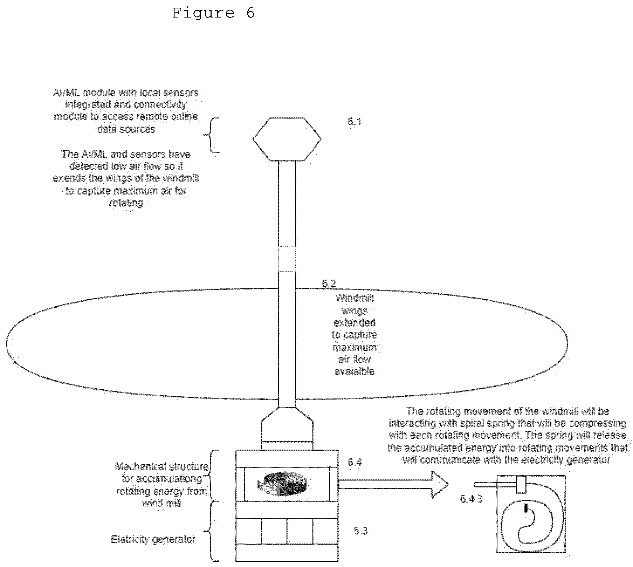

FIG. 6 Shows one concrete implementation example of mechanical structure based on spiral spring and windmill where the surface has been extended to capture maximum air flow based on the instructions from the AI/ML module element 6.1 that interacts with the windmill element 6.2 to generate rotating energy through dynamic adaptation of the windmill surface that is now extended because low air flow and will communicate with the electric generator element 6.3 for generating electricity. In this figure 6.4 consists of the mechanical structure that consists of spiral springs made of blades 6.4.3 that will be pressed by the rotating movements of the windmill and will be contracted for accumulating the rotating energy from the windmill into pressure, inertia or mechanical energy stored by the springs.
   The mechanical structure 6.4.3 in this example consists of spiral spring made of metal bar that will be contracted with each rotating movement of the windmill and the spring will release new rotating energy into electric generator when instructed by AI/ML module.

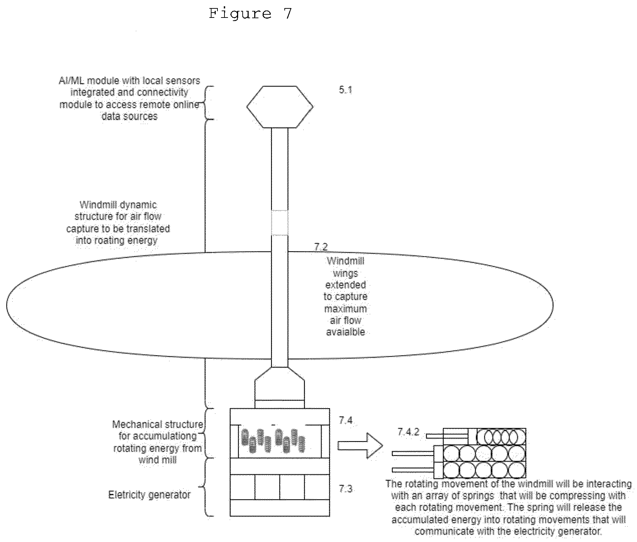

FIG. 7 Shows one concrete implementation example of mechanical structure based on horizontal spring and the windmill where the surface has been extended to capture maximum air flow based on the instructions from the AI/ML module element 6.1 that interacts with the windmill element 6.2 to generate rotating energy through dynamic adaptation of the windmill surface that is now extended because low air flow and will communicate with the electric generator element 6.3 for generating electricity. In this figure 6.4 consists of the mechanical structure that consists of horizontal springs 6.4.2 that will be pressed by the rotating movements of the windmill and will be contracted for accumulating the rotating energy from the windmill into pressure, inertia or mechanical energy stored by the springs.

The mechanical structure 6.4.3 in this example consists of horizontal spring that will be contracted with each rotating movement of the windmill and the spring will release new rotating energy into electric generator when instructed by AI/ML module.

### DETAILED EXPOSITION OF AN EMBODIMENT OF THE INVENTION

A preferred embodiment will be carried out with the help of the attached drawings and where, according to figure 1, it can be seen how the mast or structure (1.3) that supports and gives stability to the surface for capturing the wind flow and ( 1.2) transmits the movement provided by the wind flow to the mechanical rotating energy accumulator and the electric generator (1.4) which will accumulate the rotating energy as mechanical inertia energy or will communicate to the electric generator that transform the said movement into electrical energy. At the same time, the AI/ML flow sensor (1.1) controls the amount of existing wind flow and sends signals to the mast and the supporting structure (1.3) so that the surface or wind catchment area unfolds or folds, adapting the surface to the existing wind flow.

### INDUSTRIAL APPLICATION

Its main application will be to provide a simple, economical and efficient wind generator that allows the capping surface to be adapted to the existing wind flow using AI/ML modules collecting data from local sensors in the windmill and information from online systems that improve the forecast and efficiency of the windmill. The system will also integrate an innovative and cost-effective energy storage system based on mechanical components such as pressure valves, metal springs, spiral spring made of blades, etc that will accumulate the rotating energy from the windmill and will release at later stage into the electric generated when instructed by the AI/ML module. The main target of the windmill is to be used in urban areas with limited areas that can still benefit from wind energy by adapting the air capture area to the location where the system is installed in buildings or other place where only small windmills can be deployed.

## Claims

1. A device to produce electrical energy from wind flow consisting of a windmill or wind generator integrated with AI/ML (Artificial Intelligence / Machine Learning) that includes local and remote sensors to predict wind flows to be used for automatically and dynamically adapting the windmill surface, that is, the windmill blades or surface as well as all or part of the elements that compose it with the possibility to adjust to the flow of wind available at any time to optimize the production or generation of electricity **characterized in that** it includes: i) a mechanical and AI/ML software element that receives information from local sensors and remote on-line data sources to monitor, detect and anticipate wind flows to capture the level of wind flow and that interacts with the other elements that make up the windmill or wind generator to reduce or increase the surface or the blades for capturing the flow of wind air as well as increase or reduce the conversion factor rotation or movement of the blades in electric current in the electric generator; ii) material that can be extended or contracted to increase or reduce the surface or the blades that capture or collect the flow of wind; iii) the elements and systems that make up the support structure of the windmill and that can be contracted, folded, extended or unfolded and that form the infrastructure or support that hold, maintain or support the material that captures or collects the flow of wind; iv)-a mechanical structure integrated with the windmill that consists of mechanical system that accumulates energy that is the result of translating rotating energy from the windmill into inertia and mechanical pressure stored by modifying original form of metallic structures such as horizontal springs or spiral spring or void valves that accumulate pressure creating void space, the mechanical structure accumulates or transforms the rotation or movement of the windmill elements or systems that collect or capture the flow or flow of air or wind to mechanical pressure that later will release the accumulated strength into new rotating movement communicated to the electric generator.

2. The apparatus or system according to claim 1, that consits of the AI/ML module using information from local sensors or online data sources to monitor and detect and predict changes or variations in the flow or flow of wind or air and which interacts with other elements to increase, extend, expand, contract or reduce the windmill surface that captures or collects the flow or flow of wind and that includes equipment or systems for measuring wind, rotation speed measurement, flow measurement or any other system or element for measuring parameters or variables associated with the flow or flow of wind or air.

3. The apparatus or system according to claim 2, wherein the system that monitors or detects changes, variations or modifications in the level or amount of flow or wind flow, which detects air flow flows with speeds from 1 m /s or more and with a margin of error of less than 21%. Said equipment interacts with the local sensors, elements or online systems accessible through wired or wireless connectivity that make up the structure, the support, the systems or elements that will process the data from local and remote data sources to interact with the wind capture component and will instruct the movement or rotation and the wind capture material, elements or systems that extend, increase, contract or reduce and that make up the surface. or elements that collect or capture the flow or flow of wind.

4. The apparatus or system according to claim 1, where the material or elements of the windmill blades or the surface of the windmill that capture or collect the flow or flow of wind, which will be made of polyamide, fiber or the like capable of withstanding a resistance to traction greater than 1 GPa and that can vary their surface interacting with the wind, optimizing the availability of flow or flow of wind or air at any time from the set point provided by the system that monitors the amount of air flow available described in claim 3.

5. The apparatus or system according to claim 4, where the elements or systems that make up the infrastructure that must withstand all the efforts that the windmill must withstand and that will be made of some metallic alloy, fiberglass or similar. It is the structure or support in the windmill or wind generator that supports or holds the material, the elements or the blades that interact with the flow or flow of wind and that according to this invention can be extended, enlarged, increased, retracted, reduced or contracted to support, support or support the material, elements or blades that interact with the flow or flow of wind.

6. The apparatus or system according to claim 1, that consists of the mechanical structure that will translate the rotating energy received from the windmill into inertia, pressure or strength accumulated in mechanical components such as void vales, horizontal spring or spiral spring which be-release the accumulated pressure into new rotating energy communicated to the electric generator that is the result of the mechanical components returning to original shape or position or release void valve.

## Patentansprüche

1. Eine Vorrichtung zur Erzeugung elektrischer Energie aus Windströmungen, bestehend aus einer Windmühle oder einem Windgenerator mit integrierter KI/ML-Technologie, die lokale und entfernte Sensoren zur Vorhersage der Windströmungen umfasst und die Oberfläche der Windmühle, d. h. die Rotorblätter oder die Oberfläche sowie alle oder einen Teil der Elemente, automatisch und dynamisch an die jeweils verfügbare Windströmung anpasst, um die Stromerzeugung zu optimieren. Die Vorrichtung umfasst: i) eine mechanische und KI/ML-Softwarekomponente, die Informationen von lokalen Sensoren und entfernten Online-Datenquellen empfängt, um Windströmungen zu überwachen, zu erkennen und vorherzusagen, die Windstärke zu erfassen und mit den anderen Elementen der Windmühle oder des Windgenerators zu interagieren, um die Oberfläche oder die Rotorblätter zur Erfassung der Windströmung zu verkleinern oder zu vergrößern sowie den Umwandlungsfaktor der Rotorblattbewegung in elektrischen Strom im Generator zu erhöhen oder zu verringern; ii) ein Material, das sich dehnen oder zusammenziehen lässt, um die Oberfläche oder die Rotorblätter zur Erfassung der Windströmung zu vergrößern oder zu verkleinern. iii) Die Elemente und Systeme, aus denen die Tragkonstruktion der Windmühle besteht und die ein- und ausgefahren werden können und die die Infrastruktur oder Stütze bilden, die das Material hält, aufrecht hält oder stützt, das den Windstrom auffängt oder sammelt; iv) Eine in die Windmühle integrierte mechanische Struktur, die aus einem mechanischen System besteht, das die Energie speichert, die durch die Umwandlung der Rotationsenergie der Windmühle in Trägheit und mechanischen Druck entsteht. Dies geschieht durch die Modifizierung der ursprünglichen Form metallischer Strukturen, wie z. B. horizontaler Federn, Spiralfedern oder Hohlraumventile, die Druck aufbauen und einen Hohlraum erzeugen. Die mechanische Struktur speichert oder wandelt die Rotation oder Bewegung der Windmühlenelemente oder -systeme, die den Luftstrom oder Windstrom auffangen oder sammeln, in mechanischen Druck um, der später in eine neue Rotationsbewegung umgewandelt und an den Generator weitergeleitet wird.

2. Die Vorrichtung oder das System nach Anspruch 1, bestehend aus dem KI/ML-Modul, das Informationen von lokalen Sensoren oder Online-Datenquellen nutzt, um Änderungen oder Schwankungen der Wind- oder Luftströmung zu überwachen, zu erkennen und vorherzusagen, und das mit anderen Elementen interagiert, um die Oberfläche der Windmühle, die die Windströmung auffängt oder sammelt, zu vergrößern, zu erweitern, zu verkleinern oder zu vergrößern, und das Geräte oder Systeme zur Messung von Wind, Drehzahl, Durchfluss oder anderen Parametern oder Variablen im Zusammenhang mit der Wind- oder Luftströmung umfasst.

3. Die Vorrichtung oder das System nach Anspruch 2, wobei das System Änderungen, Schwankungen oder Modifikationen der Windströmungsstärke oder -menge überwacht oder erkennt, Luftströmungen mit Geschwindigkeiten ab 1 m/s und mit einer Fehlertoleranz von weniger als 21 % erfasst. Die genannte Ausrüstung interagiert mit den lokalen Sensoren, Elementen oder Online-Systemen, die über kabelgebundene oder drahtlose Verbindungen zugänglich sind und die Struktur, die Trägerstruktur, die Systeme oder Elemente bilden, welche die Daten aus lokalen und entfernten Datenquellen verarbeiten, um mit der Windfangkomponente zu interagieren und die Bewegung oder Rotation des Windfangmaterials, der Elemente oder Systeme zu steuern, die sich ausdehnen, vergrößern, zusammenziehen oder verkleinern und die Oberfläche bilden, oder der Elemente, die den Windstrom sammeln oder auffangen.

4. Die Vorrichtung oder das System nach Anspruch 1, wobei das Material oder die Elemente der Windmühlenflügel oder die Oberfläche der Windmühle, die den Windstrom einfangen oder sammeln, aus Polyamid, Faser oder einem ähnlichen Material bestehen, das einer Zugfestigkeit von mehr als 1 GPa standhält und dessen Oberfläche in Wechselwirkung mit dem Wind veränderbar ist, um die Verfügbarkeit des Windstroms oder Luftstroms jederzeit gegenüber dem vom in Anspruch 3 beschriebenen System zur Überwachung der verfügbaren Luftmenge vorgegebenen Sollwert zu optimieren.

5. Die Vorrichtung oder das System nach Anspruch 4, wobei die Elemente oder Systeme, die die Infrastruktur bilden, die allen Belastungen standhalten muss, denen die Windmühle ausgesetzt ist, aus einer Metalllegierung, Glasfaser oder einem ähnlichen Material bestehen. Es handelt sich um die Struktur oder Halterung in der Windmühle oder dem Windgenerator, die das Material, die Elemente oder die Rotorblätter, die mit dem Windstrom interagieren, trägt oder hält und die gemäß dieser Erfindung verlängert, vergrößert, erhöht, eingefahren, verkleinert oder zusammengezogen werden kann, um das Material, die Elemente oder die Rotorblätter, die mit dem Windstrom interagieren, zu tragen oder zu stützen.

6. Die Vorrichtung oder das System nach Anspruch 1, bestehend aus der mechanischen Struktur, die die von der Windmühle aufgenommene Rotationsenergie in Trägheit, Druck oder Kraft umwandelt, die in mechanischen Bauteilen wie Hohlventilen, horizontalen Federn oder Eine Spiralfeder setzt den angesammelten Druck in neue Rotationsenergie um, die dem Generator zugeführt wird. Dies ist das Ergebnis der Rückkehr der mechanischen Komponenten in ihre ursprüngliche Form oder Position bzw. des Entlüftungsventils.

## Revendications

1. Un dispositif de production d'énergie électrique à partir du vent, composé d'une éolienne ou d'un générateur éolien intégrant une intelligence artificielle (IA) et un système d'apprentissage automatique (ML). Ce dispositif comprend des capteurs locaux et distants permettant de prédire les flux de vent à exploiter et d'adapter automatiquement et dynamiquement la surface de l'éolienne (pales ou surface), ainsi que tout ou partie de ses éléments constitutifs. Il peut ainsi s'ajuster en fonction du vent disponible à tout moment afin d'optimiser la production d'électricité. Le dispositif inclut : i) un élément mécanique et logiciel d'IA/ML qui reçoit des informations de capteurs locaux et de sources de données en ligne distantes pour surveiller, détecter et anticiper les flux de vent, en capter le niveau et interagir avec les autres éléments constitutifs de l'éolienne ou du générateur éolien afin de réduire ou d'augmenter la surface ou les pales pour capter le flux d'air, ainsi que d'augmenter ou de réduire le facteur de conversion de la rotation ou du mouvement des pales en courant électrique dans le générateur ; ii) un matériau extensible ou rétractable permettant d'augmenter ou de réduire la surface ou les pales captant le flux d'air. iii) Les éléments et systèmes constituant la structure porteuse de l'éolienne, qui peuvent être contractés, pliés, déployés ou étendus, et qui forment l'infrastructure ou le support maintenant le matériel captant le flux d'air ; iv) Une structure mécanique intégrée à l'éolienne, composée d'un système mécanique accumulant l'énergie résultant de la conversion de l'énergie de rotation de l'éolienne en inertie et pression mécanique. Cette énergie est stockée grâce à la modification de la forme originale de structures métalliques telles que des ressorts horizontaux ou hélicoïdaux, ou des soupapes créant un espace vide et accumulant ainsi la pression. La structure mécanique accumule ou transforme la rotation ou le mouvement des éléments ou systèmes de l'éolienne captant le flux d'air en une force mécanique ou une pression qui sera ensuite libérée pour générer un nouveau mouvement de rotation transmis au générateur électrique.

2. L'appareil ou le système selon la revendication 1, comprenant un module d'IA/ML utilisant des informations provenant de capteurs locaux ou de sources de données en ligne pour surveiller, détecter et prédire les changements ou variations du flux d'air ou de vent, et interagissant avec d'autres éléments pour augmenter, étendre, agrandir, contracter ou réduire la surface de l'éolienne qui capte ou collecte le flux d'air ou de vent. Ce système inclut également des équipements ou des systèmes de mesure du vent, de la vitesse de rotation, du débit, ou tout autre système ou élément permettant de mesurer des paramètres ou des variables associés au flux d'air ou de vent.

3. L'appareil ou le système selon la revendication 2, dans lequel le système surveille ou détecte les changements, variations ou modifications du niveau ou de la quantité de flux d'air ou de vent, et détecte les flux d'air à des vitesses supérieures ou égales à 1 m/s avec une marge d'erreur inférieure à 21 %. Cet équipement interagit avec les capteurs locaux, les éléments ou les systèmes en ligne accessibles par connectivité filaire ou sans fil qui constituent la structure, le support, les systèmes ou les éléments qui traiteront les données provenant de sources de données locales et distantes pour interagir avec le composant de captage du vent et qui commanderont le mouvement ou la rotation du matériau, des éléments ou des systèmes de captage du vent qui s'étendent, augmentent, se contractent ou se réduisent et qui constituent la surface, ou les éléments qui collectent ou captent le flux ou le courant du vent.

4. L'appareil ou le système selon la revendication 1, dans lequel les matériaux ou éléments des pales de l'éolienne ou de la surface de celle-ci captant le flux d'air sont constitués de polyamide, de fibres ou d'un matériau similaire capable de résister à une traction supérieure à 1 GPa et dont la surface peut varier en interaction avec le vent, optimisant ainsi la disponibilité du flux d'air à tout moment par rapport à la valeur de consigne fournie par le système de surveillance du débit d'air disponible décrit dans la revendication 3.

5. L'appareil ou le système selon la revendication 4, dans lequel les éléments ou systèmes constituant l'infrastructure devant résister aux contraintes auxquelles l'éolienne est soumise sont constitués d'un alliage métallique, de fibres de verre ou d'un matériau similaire. Il s'agit de la structure ou du support de l'éolienne ou du générateur éolien qui supporte ou maintient les matériaux, les éléments ou les pales interagissant avec le flux d'air et qui, selon la présente invention, peut être étendu, agrandi, augmenté, rétracté, réduit ou contracté pour supporter lesdits matériaux, éléments ou pales.

6. L'appareil ou le système selon la revendication 1, constitué de la structure mécanique qui convertit l'énergie de rotation reçue de l'éolienne en inertie, pression ou force accumulée dans des composants mécaniques tels que des soupapes à vide, un ressort horizontal ou ressort spiral qui libère la pression accumulée en une nouvelle énergie de rotation transmise au générateur électrique, résultant du retour des composants mécaniques à leur forme ou position initiale, ou soupape de décharge.
